# FASCICULE DE BREVET EUROPEEN

(11) **EP 1 991 794 B1**
(45) Date de publication et mention de la délivrance du brevet: **14.09.2016**
(21) Numéro de dépôt: 07712280.2
(22) Date de dépôt: 21.02.2007
(51) Int. Cl.: F16B 11/00, C09J 5/00

(54) **SERVOFREIN MUNI D'UN JOINT ADHÉSIF ET PROCÉDÉ DE MONTAGE**
MIT EINER KLEBEVERBINDUNG VERSEHENER BREMSKRAFTVERSTÄRKER UND VERFAHREN ZUR DESSEN MONTAGE
POWER-ASSIST BRAKE SYSTEM EQUIPPED WITH ADHESIVE JOINT AND METHOD FOR MOUNTING SAME

(30) Priorité: 27.02.2006 FR 0601847
(43) Date de publication de la demande: 19.11.2008
(73) Titulaire: Robert Bosch GmbH, 70442 Stuttgart (DE)
(72) Inventeur: LHUILLIER, Laurent, F-93150 Le Blanc Mesnil (FR); BENOÎT, Alain, F-93410 Vaujours (FR)
(86) Numéro de dépôt international: PCT/EP2007/051682
(87) Numéro de publication internationale: WO 2007/096391

(56) Documents cités:
- WO-A-2004/033274
- DE-A1- 3 428 868
- FR-A1- 2 711 749
- GB-A- 2 085 989

## Description

La présente invention a pour objet un servofrein placé contre un tablier d'un véhicule. L'invention a également pour objet un procédé de montage de ce servofrein contre un tablier. Le but de l'invention est de faciliter le montage d'un tel servofrein situé dans le compartiment moteur d'un véhicule et de le relier à une pédale de frein par l'intermédiaire d'une commande de pédalier situé, de l'autre coté du tablier, à l'intérieur de l'habitacle du véhicule.

Le document WO 2004/033274 A décrit un servofrein, à fixer dans un compartiment moteur, contre un tablier et à visser du coté de l'habitacle d'un véhicule comportant un joint adhésif.

Le domaine d'application de l'invention concerne les joints présents sur un tablier lors du montage d'un véhicule sur une chaîne de fabrication. Ces joints sont nécessaires pour assurer une étanchéité lorsque qu'un câble ou une pièce mobile telle une tige ou un levier passe, par une ouverture du tablier, du compartiment moteur vers l'habitacle du véhicule.

Dès lors, il est nécessaire pour le confort et la sécurité de l'utilisateur du véhicule d'isoler au mieux la séparation créé par le tablier entre le compartiment moteur et l'habitacle. Il faut donc éviter tout interstice à l'endroit d'une ouverture et à celui d'un passage d'une pièce au travers du tablier.

Ainsi le joint placé contre le tablier et le plus souvent du coté du compartiment moteur a pour fonction de supprimer ces interstices. Il permet d'éviter des courants d'air à l'intérieur de l'habitacle mais aussi d'éviter ou à des fuites éventuelles de gaz d'échappements du moteur ou à des émanations de fuites éventuelles d'huiles tombées sur le bloc moteur, de venir perturber voire d'intoxiquer, par des vapeurs toxiques, le conducteur du véhicule.

Ce joint permet également de garantir, lors de puissantes arrivées d'eau sur le véhicule en circulation de type gros orages ou lors du nettoyage du véhicule avec un appareil de lavage à hautes pressions, un habitacle sec, exempt d'humidité.

Ce joint permet également d'assurer une bonne isolation phonique des bruits ou des vibrations du moteur au travers du tablier en direction de l'habitacle.

Plus précisément le joint faisant l'objet de l'invention est celui qui assure l'étanchéité entre un servofrein situé coté compartiment moteur et un système de commande de pédalier situé coté habitacle. Dans l'état de la technique ce joint épouse les contours du servofrein et respecte, par des trous, les passages obligés de pièces en mouvement ainsi que ceux des goujons de fixation et de serrage du servofrein sur le tablier. Le servofrein est le plus généralement équipé de ce joint. Pour autant, on peut distinguer deux cas de figures.

Dans un premier cas, la présence de deux opérateurs sur la chaîne de montage est nécessaire, l'un du coté du compartiment moteur pour présenter le servofrein équipé de son joint et l'autre du coté de l'habitacle pour fixer le servofrein et présenter le système de commande de pédalier. La fixation est réalisée, par exemple, grâce à des vis coté habitacle sur des goujons solidaires du servofrein et traversant le tablier.

La présence de deux opérateurs pour la réalisation de cette seule opération sur la chaîne d'assemblage du véhicule présente des problèmes de coût et de coordination.

Dans un second cas l'unique opérateur doit contourner le tablier pour récupérer dans l'habitacle les parties du servofrein permettant de le fixer correctement coté habitacle. La manoeuvre pose problème car le risque est important de perdre le servofrein ou tout au moins son positionnement correct face à l'ouverture du tablier pendant que l'opérateur contourne le tablier. Or, un positionnement approximatif du servofrein sur le tablier peut, non seulement compliquer sa liaison dans l'habitacle avec le système de commande du pédalier, mais aussi entraîner la présence d'interstices à la jonction du tablier préjudiciables à l'étanchéité du compartiment moteur vis à vis de l'habitacle.

Quelques solutions existent à ce jour, peu nombreuses, permettant, pour un opérateur unique, de relier, à partir du compartiment moteur, le servofrein au pédalier de commande et de fixer solidement le tout au tablier. Néanmoins la méthode de montage la plus couramment utilisé est celle consistant à assembler et fixer solidement servofrein et commande de pédalier à partir de l'habitacle.

Le problème est de réussir à monter un servofrein avec un joint pouvant permettre à un seul opérateur de relier et de fixer correctement le servofrein à la commande de pédalier dans l'habitacle sachant que la présentation du servofrein sur le tablier se fait toujours à partir du compartiment moteur.

Dans la solution de l'invention, le servofrein offre la particularité de présenter un joint adhésif avec pour chaque face un film protecteur. Les deux faces du joint étant semblables, la couleur des films protecteurs différencie la face destinée à être collée sur le servofrein de celle collée sur le tablier.

Le servofrein muni de son joint est présenté sur la chaîne de montage par l'opérateur. Juste avant de l'appliquer sur le tablier, l'opérateur ôte le film protecteur de la seconde face adhésive du joint qui va ainsi adhérer sur le tablier.

Dans la solution de l'invention, le film protecteur est prévu afin d'être ôter rapidement dans un seul mouvement, en respectant la cadence de la chaîne de montage, sans que le joint ne se déchire et sans qu'il ne subsiste le moindre morceau de film protecteur sur la face à présenter sur le tablier. De plus, l'adhérence du joint au tablier est prévue pour supporter le poids du servofrein d'environ deux à trois Kilogrammes. De la sorte, l'opérateur à la possibilité et le temps nécessaire pour passer du compartiment moteur à l'habitacle sans intervention d'un collègue et sans prendre le risque de perdre le servofrein ou son ajustement face à l'ouverture du tablier.

La solution permet également de conserver un couple de serrage correct des vis sur les goujons de fixation du servofrein tout en respectant une bonne étanchéité phonique, thermique et mécanique du joint.

L'invention a donc pour objet un servofrein à fixer dans un compartiment moteur, contre un tablier et à visser du coté de l'habitacle d'un véhicule caractérisé en ce que sa face orientée contre le tablier comporte un joint adhésif.

L'invention sera mieux comprise à la lecture de la description qui suit et à l'examen des figures qui l'accompagnent. Celles-ci ne sont présentées qu'à titre indicatif et nullement limitatif de l'invention. Les figures montrent:
- Figure 1 : une représentation d'un véhicule avec son compartiment moteur, son habitacle et son tablier;
- Figure 2 : une vue éclaté du véhicule avec son servofrein et sa commande de pédalier;
- Figure 3 : une représentation d'un servofrein dans l'état de la technique incliné dans le plan du tablier;
- Figure 4 : le joint du servofrein de l'invention;

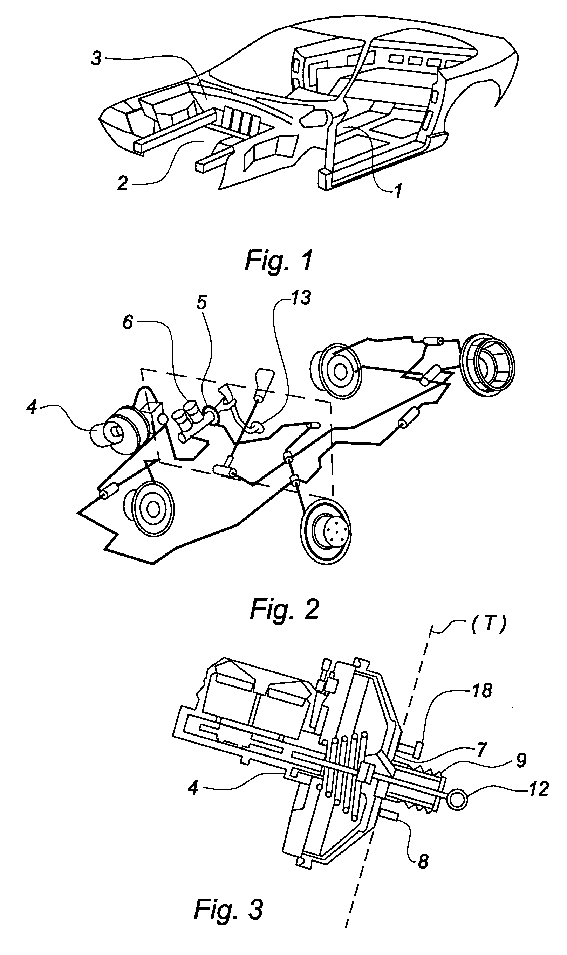

La figure 1 montre un véhicule tel qu'il peut se présenter en phase d'assemblage sur une chaîne de montage. Trois zones se distinguent entre-autres, l'habitacle 1 déterminant la structure intérieure du véhicule, le compartiment moteur 2 permettant de recevoir le moteur et les principales fonctions dynamiques du véhicule et entre les deux, le tablier 3.

Le tablier 3 se présente comme une paroi de tôle inclinée vers l'habitacle. Il débute au pied du support du bloc moteur pour s'incliner progressivement jusqu'au pied du pare-brise du véhicule.

La figure 2 désigne les principaux dispositifs impliquant l'invention. On y trouve le servofrein 4 coté compartiment moteur 2 et la commande de pédalier 5 coté habitacle 1 ici représenté avec un maître-cylindre 6. Sur la figure 3 un servofrein 4 est représenté avec sa surface d'appui 7 sur le tablier 3 ainsi que le plan incliné (T) correspondant à la surface du tablier 3. Les goujons 8 de fixation solidaires du servofrein sont localisés du coté de la surface venant en appui sur le tablier 2; la tige de commande 9 du servofrein est centrée sur cette face et les goujons sont en périphérie. La tige de commande 9 et les goujons 8 passent, par plusieurs orifices 10 et 11 et du tablier et du joint en l'occurrence un orifice 11 pour la tige de commande 9 et, en général, quatre orifices 10 bien plus petits pour les quatre goujons 8. La goupille 12 sert quant à elle à la fixation de la tige de commande 9 à la pédale de frein 13. C'est sur la surface d'appui 7 du servofrein 4 que le joint 14 est préalablement collé avant l'application et la fixation de l'ensemble sur le tablier 2 pendant l'assemblage du véhicule.

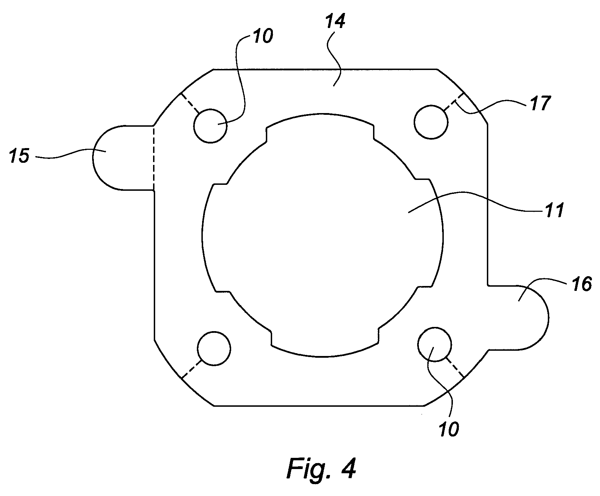

La figure 4 représente le joint 14 du servofrein de l'invention. Au centre du joint 14, on observe l'orifice 11 quasi circulaire prévu pour le passage de la tige de commande 9 du servofrein 4 ainsi que les orifices 10 de passages des goujons 8 de fixation situés, dans cet exemple, à chaque angles. Les onglets 15 et 16 correspondent chacun à un onglet de préhension pour chaque film protecteur de chaque face adhésive du joint 14. Un film protecteur est un film fin qui recouvre la totalité d'une face du joint 14 et qui présente exactement les mêmes découpes aux mêmes endroits de sorte que, dans la pratique, la matière première et le film sont découpés ensemble à partir d'un même bloc. Avant que le joint adhésif ne soit associer au servofrein, chaque face est identifiable par son film protecteur, dans le cas présent, une couleur plus foncée et un film plus épais et moins souple genre papier kraft légèrement plastifié est utilisé pour une face et un film blanc plus fin et plus élastique est utilisé pour l'autre face mais on pourrait imaginer, par exemple, des reliefs différents. Ce premier film protecteur peut être enlevé sans précaution particulière car il ne rencontre aucun obstacle et n'a pour rôle que de protéger la face adhésive du joint destinée à être collé sur le servofrein de l'invention. Le second film protecteur est plus souple voire plus élastique afin de se déchirer moins facilement lorsqu'on l'ôte. De plus il possède des prédécoupes 17 de préférence rectilignes allant des bords extérieurs de chaque orifices 10 correspondant aux goujons 8 de fixation du servofrein 4 jusqu'au bord extérieur du joint 14 lui-même, selon une direction, de préférence, diamétrale au centre du joint. Ces prédécoupes 17 permettent, pour l'opérateur sur la chaîne d'assemblage et ce, malgré la présence des goujons 8, d'ôter rapidement le film. En effet, lorsque l'opérateur tire cet onglet 16, proche d'une prédécoupe 17, le film s'ouvre à l'endroit de la prédécoupe 17 en laissant passer le premier goujon 8 puis le second, ce jusqu'au dernier. Le film est néanmoins suffisamment résistant pour ne pas se rompre et permettre d'un seul tenant de l'enlever en le faisant passer au dessus de la tige de commande 9.

Lors de la création des découpes 17 sur le film protecteur, l'outil tranchant, par exemple un massicot, utilisé pour l'opération peut également entamer voire découper dans l'élan la matière du joint 14 lui-même. Les conséquences à cet endroit sont minimes car le joint 14 reste bien collé au tablier 3 et les prédécoupes 17 se situent à des endroits communiquant simplement avec les petits orifices 10 des goujons; aucun lien n'est établi entre le bord extérieur du joint et son bord intérieur représenté par l'orifice 11 centré de la tige de commande 9 du servofrein 4.

Le matériau employé pour le joint est à base d'une mousse de polyuréthanne, à titre indicatif, de densité d'environ 100 Kg par mètre cube et d'une épaisseur proche du Millimètre. Ce type de matériau, imputrescible, à la fois souple dans son épaisseur et rigide dans le plan de sa surface, permet d'isoler la face 7 d'appui du servofrein 4 contre le tablier 3, du tablier 3 lui-même. Le contact métal-métal est évité et tout bruit parasite éventuel de vibration. Cette épaisseur d'environ un Millimètre corrélée au matériau du joint 14 permet de conserver un amortissement souple et élastique du joint 14 dans son épaisseur ainsi qu'une rigidité de sa surface plane. Cette rigidité permet, au moment ou le joint 14 est enfilé au travers des goujons 8 et de la tige de commande 9, contre le servofrein 4, de faciliter l'opération. De la sorte saisi par l'opérateur dans un angle, une simple translation permet au joint de venir se poser puis se coller de façon bien parallèle à la surface du servofrein.

Cette épaisseur proche du Millimètre apporte surtout une sécurité dans le serrage des vis 18 sur les goujons coté habitacle; en effet une épaisseur plus importante du joint 14 apporte trop d'élasticité et de jeu lors du serrage de ces vis 18. Les vis 18 une fois serrées à la fois suffisamment pour maintenir le servofrein 4 mais sans pour autant trop écrasé le joint 14 et perdre son caractère isolant, finissent peu à peu, à cause de cette surépaisseur, par se desserrer.

En ce qui concerne la découpe des orifices 10 de passage des goujons au travers du joint 14, la solution impose que le diamètre de ces orifices 10 soit plus grand d'environ cinq dixième de Millimètre que le diamètre des goujons 8. Au delà, c'est la surface du servofrein qui est en contact direct avec le tablier avec donc, à nouveau, un contact métal-métal et toutes les contraintes de vibrations et de bruit inhérentes. En deçà c'est la matière du joint lui-même qui risque de se déchirer au contact des goujons 8.

La colle utilisée sur chacune des surfaces du joint 14 que se soit un dérivé de glue ou de sécotine ne doit surtout pas altérer les qualités physiques du joint lui-même et permettre de supporter le poids du servofrein 4, au moins le temps de sa fixation définitive par l'opérateur. En cela l'angle du tablier 3 orienté vers l'habitacle 2 y contribue en partie en prenant appui sur la pente offerte par le tablier 3; de la sorte la résistance à l'arrachement de la colle du joint 14 ne doit supporter qu'une partie du poids du servofrein 4.

L'invention fait également l'objet d'un procédé de montage du servofrein 4 avec son joint adhésif 14. Lors de l'assemblage du véhicule sur la chaîne de fabrication, l'opérateur une fois le servofrein 4 en main, ôte alors le film protecteur de la face adhésive du joint 14 grâce à son onglet de préhension 16. L'onglet 16 facilite l'opération du fait de la nécessité pour un opérateur, bien souvent de porter de légers gants de protection en laine, gants qui complique ce type d'opération. A ce stade du montage chacune des prédécoupes 17 permet d'ouvrir un passage pour chaque goujon 8 dans le mouvement de traction sur le film protecteur, l'orifice central 11 du joint permettant de laisser passer le joint 14 par dessus le mécanisme de la tige 9 de commande sans avoir besoin d'une prédécoupe 17 pour le passage de la tige de commande. Dans une même action l'opérateur applique, coté compartiment moteur 2, le servofrein 4 avec sa face adhésive contre les orifices du tablier correspondant à la tige de commande 9 et aux goujons 8, le servofrein 4 est alors maintenu seul contre le tablier 3 grâce à la seule force adhésive du joint 14. Puis l'opérateur contourne le véhicule pour gagner l'habitacle et saisir puis visser les vis 18 de fixation des goujons 8 du servofrein 4 jusqu'à sentir une résistance souple du joint 14 contre le tablier 3. Dans le même mouvement il fixe la tige de commande 9 grâce à la goupille 12 du servofrein 4 à la commande de pédalier 5.

Dans une variante on fixe le joint contre le tablier.

## Revendications

1. Servofrein (4), à fixer dans un compartiment moteur (2), contre un tablier (3) et à visser du coté de l'habitacle (1) d'un véhicule comportant un joint (14) adhésif **caractérisé en ce que** le joint (14) du servofrein comporte un film protecteur comportant les onglets (15) et (16) correspondant à chaque face adhésive du joint (14) et **en ce que** le film protecteur du joint à coller sur le tablier comporte des prédécoupes (17) qui partent des passages des goujons au bord extérieur du joint (14).

2. Servofrein selon la revendication 1, **caractérisé en ce que** le joint comporte deux faces adhésives, l'une contre le servofrein et l'autre contre le tablier, les deux faces adhésives pouvant supporter seules une fixation du servofrein contre le tablier.

3. Servofrein selon l'une des revendications 1 à 2, **caractérisé en ce que** la face permet de développer une force adhésive, cette force adhésive est prévue pour résister un laps de temps nécessaire à la fixation définitive par des moyens mécanique, du coté habitacle, du servofrein contre le tablier.

4. Servofrein selon l'une des revendications 1 à 3 **caractérisé en ce que** chaque film protecteur est d'une couleur et ou d'une matière différente.

5. Servofrein selon l'une des revendications 1 à 4 **caractérisé en ce qu'**une forme et des prédécoupes du joint épousent les contours du servofrein et les contours de goujons (8) de fixations du servofrein.

6. Servofrein selon l'une des revendications 1 à 5 **caractérisé en ce que** sa matière est souple et élastique dans le sens de son épaisseur.

7. Servofrein selon l'une des revendications 1 à 6 **caractérisé en ce que** sa matière comporte un matériau d'absorption de contraintes thermiques, phoniques et mécaniques.

8. Procédé de montage d'un servofrein, contre un tablier, du coté d'un compartiment moteur d'un véhicule **caractérisé en ce qu'**il comporte les étapes suivantes:
- on applique un joint adhésif sur un servofrein sur une face comportant une tige de commande de pédalier (9),
- on applique, coté compartiment moteur, le servofrein muni de son joint adhésif contre l'orifice (11) du tablier correspondant au passage de la tige de commande associée à un pédalier de commande,
- on serre, coté habitacle, les vis (18) de fixation de goujons (8) du servofrein.

9. Procédé de montage selon la revendication 8, **caractérisé en ce que** l'on ôte un film protecteur du joint sur une face du joint grâce à un onglet de préhension (15),
- on colle le joint sur la face du servofrein équipée de goujons de fixation et destinée à être montée contre le tablier,
- on ôte un second film protecteur du joint comportant les prédécoupes (17) grâce à un onglet (16) de préhension.

## Patentansprüche

1. Bremskraftverstärker (4), der in einem Motorraum (2) an einer Stirnwand (3) zu befestigen und auf Seiten der Fahrgastzelle (1) eines Fahrzeugs zu verschrauben ist und der eine Klebedichtung (14) aufweist, **dadurch gekennzeichnet, dass** die Dichtung (14) des Bremskraftverstärkers einen Schutzfilm umfasst, der Keile (15) und (16) aufweist, die jeder Klebefläche der Dichtung (14) entsprechen, und dass der Schutzfilm der Dichtung, die auf die Stirnwand zu kleben ist, Vorausschnitte (17) aufweist, die Durchlässe für Dübel an der Außenkante der Dichtung (14) gemeinsam nutzen.

2. Bremskraftverstärker nach Anspruch 1, **dadurch gekennzeichnet, dass** die Dichtung zwei Klebeflächen aufweist, eine an dem Bremskraftverstärker und die andere an der Stirnwand, wobei die zwei Klebeflächen eine Befestigung des Bremskraftverstärkers an der Stirnfläche allein tragen können.

3. Bremskraftverstärker nach einem der Ansprüche 1 bis 2, **dadurch gekennzeichnet, dass** die Fläche ermöglicht, eine Klebekraft aufzubauen, wobei diese Klebekraft dazu bestimmt ist, für eine Zeitdauer zu halten, die bis zur endgültigen Befestigung durch mechanische Mittel auf Seiten der Fahrgastzelle des Bremskraftverstärkers an der Stirnwand erforderlich ist.

4. Bremskraftverstärker nach einem der Ansprüche 1 bis 3, **dadurch gekennzeichnet, dass** jeder Schutzfilm eine andere Farbe und/oder ein anderes Material besitzt.

5. Bremskraftverstärker nach einem der Ansprüche 1 bis 4, **dadurch gekennzeichnet, dass** eine Form und Vorausschnitte der Dichtung an die Umrisse des Bremskraftverstärkers und an die Umrisse von Dübeln (8) für die Befestigung des Bremskraftverstärkers angepasst sind.

6. Bremskraftverstärker nach einem der Ansprüche 1 bis 5, **dadurch gekennzeichnet, dass** sein Material in Richtung seiner Dicke nachgiebig und elastisch ist.

7. Bremskraftverstärker nach einem der Ansprüche 1 bis 6, **dadurch gekennzeichnet, dass** sein Material ein Material zur Absorption thermischer, phonischer oder mechanischer Beanspruchungen umfasst.

8. Verfahren zum Montieren eines Bremskraftverstärkers an einer Stirnwand auf Seiten eines Motorraums eines Fahrzeugs, **dadurch gekennzeichnet, dass** es die folgenden Schritte umfasst:
- Aufbringen einer Klebedichtung auf einen Bremskraftverstärker auf einer Fläche, die einen Pedalanordnungssteuerstift (9) enthält,
- Aufbringen auf Seiten des Motorraums des Bremskraftverstärkers, der mit seiner Klebedichtung versehen ist, auf eine Öffnung (11) der Stirnwand, die den Durchgang des Steuerstifts, dem eine Steuerpedalanordnung zugeordnet ist, entspricht,
- Festziehen auf Seiten der Fahrgastzelle der Schrauben (18) zur Befestigung von Dübeln (8) des Bremskraftverstärkers.

9. Montageverfahren nach Anspruch 8, **dadurch gekennzeichnet, dass** ein Schutzfilm der Dichtung auf einer Fläche der Dichtung mittels eines Greifkeils (15) abgenommen wird,
- die Dichtung auf die Fläche des Bremskraftverstärkers geklebt wird, die mit Befestigungsbügeln ausgerüstet ist und dazu bestimmt ist, an der Stirnwand montiert zu werden, und
- ein zweiter Schutzfilm der Dichtung, der die Vorausschnitte (17) enthält, kraft eines Greifkeils (16) abgehoben wird.

## Claims

1. Brake servo (4) to be fixed in an engine compartment (2) against a bulkhead (3) and screw-fastened from the passenger compartment (1) side of a vehicle, comprising an adhesive seal (14), **characterized in that** the brake servo seal (14) has a protective film with the tabs (15) and (16) corresponding to each adhesive face of the seal (14), and **in that** the protective film of the seal to be stuck to the bulkhead is precut (17) along lines leading from the stud holes to the outer edge of the seal (14).

2. Brake servo according to Claim 1, **characterized in that** the seal has two adhesive faces, one on the brake servo side and the other on the bulkhead side, the two adhesive faces being capable alone of supporting the brake servo while it is being fixed to the bulkhead.

3. Brake servo according to one of Claims 1 to 2, **characterized in that** the face is able to develop an adhesive force, this adhesive force being designed to last for long enough for the brake servo to be permanently attached to the bulkhead from the passenger compartment side using mechanical means.

4. Brake servo according to one of Claims 1 to 3, **characterized in that** each protective film is of a different color and/or of a different material.

5. Brake servo according to one of Claims 1 to 4, **characterized in that** the shape and cut in the seal follow the outlines of the brake servo and the outlines of the studs (8) used to attach the brake servo.

6. Brake servo according to one of Claims 1 to 5, **characterized in that** its material is flexible and elastic in the direction of its thickness.

7. Brake servo according to one of Claims 1 to 6, **characterized in that** the material of which it is made includes a substance for absorbing thermal, acoustic and mechanical stresses.

8. Method of mounting a brake servo on a bulkhead from the engine compartment side of a vehicle, **characterized in that** it involves the following steps:
- an adhesive seal is applied to a brake servo on a face thereof that comprises a pedal box control rod (9),
- the brake servo fitted with its adhesive seal is applied from the engine compartment side against the aperture (11) in the bulkhead that corresponds to the hole through which the control rod associated with a control pedal box passes,
- the screws (18) that attach to studs (8) of the brake servo are tightened from the passenger compartment side.

9. Mounting method according to Claim 8, **characterized in that** a protective film of the seal is removed from one face of the seal using a pull tab (15),
- the seal is stuck to that face of the brake servo that is fitted with the attachment studs and that is intended to be mounted against the bulkhead,
- a second protective film of the seal comprising the cuts (17) is removed using a pull tab (16).
